# FASCICULE DE BREVET EUROPEEN

(11) **EP 3 232 492 B1**
(45) Date de publication et mention de la délivrance du brevet: **20.02.2019**
(21) Numéro de dépôt: 17160127.1
(22) Date de dépôt: 09.03.2017
(51) Int. Cl.: H01M 2/10, B60L 11/18, B60L 3/00

(54) **DISPOSITIF DE PROTECTION MULTIPLE POUR UNE BATTERIE À CELLULE(S) DE STOCKAGE**
MEHRFACHSCHUTZVORRICHTUNG FÜR EINE SPEICHERZELLENBATTERIE
MULTIPLE PROTECTION DEVICE FOR A BATTERY WITH STORAGE CELL(S)

(30) Priorité: 14.04.2016 FR 1653307
(43) Date de publication de la demande: 18.10.2017
(73) Titulaire: PSA Automobiles SA, 78300 Poissy (FR)
(72) Inventeur: PERU, Marc, 92290 Chatenay-Malabry (FR)

(56) Documents cités:
- WO-A1-2013/094453
- FR-A1- 2 986 911
- FR-A1- 2 995 273

## Description

L'invention concerne les batteries rechargeables qui sont destinées à équiper certains véhicules et qui comprennent au moins une cellule de stockage d'énergie électrique.

Certains véhicules, de type tout électrique ou hybride et éventuellement de type automobile, sont équipés, généralement dans leur soubassement, d'une ou plusieurs batteries rechargeables qui comprennent chacune un boîtier logeant au moins une cellule chargée de stocker de l'énergie électrique. Les cellules peuvent, par exemple, être de type Li-ion ou Ni-Mh ou plomb ou encore Lithium-Métal-Polymère (ou LMP).

Comme le sait l'homme de l'art, lorsque le véhicule subit un choc latéral sur un côté longitudinal (comprenant au moins une portière), sa batterie rechargeable peut être endommagée ce qui peut entraîner un fort (voire très fort) échauffement interne. Ce dernier peut alors entraîner un gonflement et un dégazage d'un gaz inflammable qui peut aboutir à un incendie qui va alors échauffer les cellules voisines et ainsi provoquer une réaction en chaîne (ou « emballement thermique ») aboutissant à un incendie de toute la batterie, qui peut éventuellement se propager à l'ensemble du véhicule.

Pour réduire les risques d'endommagement de la batterie rechargeable en cas de choc latéral, il est possible de renforcer notablement la structure du véhicule dans la zone où est installée cette batterie rechargeable. Un tel renfort peut, par exemple, être obtenu au moyen de barres en acier. Mais ce renfort induit une augmentation de la masse et du coût du véhicule, et ne permet pas d'empêcher un emballement interne en cas d'endommagement interne d'une cellule.

Il est également possible de placer à l'extérieur de la batterie rechargeable, le long d'au moins une paroi longitudinale de son boîtier, un conteneur comprenant un fluide (gaz ou liquide) destiné à amortir, par répartition de pression, un choc latéral subi par le véhicule sur un côté longitudinal. Mais ce renfort ne permet pas d'empêcher un emballement thermique interne en cas d'endommagement interne d'une cellule. FR2995273 divulgue un système de batteries pour un véhicule automobile comportant un compartiment contenant des cellules électrochimiques. Le compartiment contient au moins une poche compressible de protection contre un choc.

FR2986911 divulgue un dispositif de refroidissement d'une batterie. Ce dispositif comprend au moins un conduit auxiliaire muni de trous e un premier moyen de contrôle d'accès agencé pour inonder la batterie via les trous en cas de réception d'une instruction d'alerte générée consécutivement à la réalisation d'au moins une condition d'alerte choisie.

L'invention a notamment pour but d'améliorer la situation.

Elle propose notamment à cet effet un ensemble de batterie selon la revendication 1, comprenant une batterie et un dispositif de protection pour la batterie de véhicule comprenant un boîtier définissant un logement logeant au moins une cellule de stockage d'énergie électrique, le dispositif de protection comprenant au moins un conteneur destiné à être placé le long d'une paroi longitudinale du boîtier et comprenant un liquide destiné à amortir un choc subi par le véhicule sur un côté longitudinal.

Cet ensemble de batterie se caractérise par le fait que chaque conteneur comprend au moins une sortie destinée à communiquer avec le logement et équipée d'un moyen de contrôle d'accès propre à passer d'un état fermé à un état ouvert dans lequel il autorise l'évacuation du liquide dans le logement via sa sortie lorsqu'une température dans son voisinage est supérieure à un seuil choisi.

Ainsi, le conteneur assure non seulement une fonction de protection contre les chocs latéraux par amortissement par répartition de pression, mais également une fonction de protection contre les emballements thermiques internes lorsque la température devient supérieure à un seuil choisi.

Cet ensemble de batterie selon l'invention peut comporter d'autres caractéristiques qui peuvent être prises séparément ou en combinaison, et notamment :
- il peut comprendre deux conteneurs destinés à être placés respectivement le long de deux parois longitudinales opposées du boîtier ;
   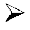 ces conteneurs peuvent communiquer entre eux via au moins un conduit ;
   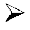 en variante ou en complément, il peut comprendre un conteneur auxiliaire contenant du liquide, communiquant avec les conteneurs et comprenant au moins une sortie destinée à communiquer avec le logement et équipée d'un moyen de contrôle d'accès propre à passer d'un état fermé à un état ouvert dans lequel il autorise l'évacuation du liquide dans le logement via sa sortie lorsqu'une température dans son voisinage est supérieure à un seuil choisi ;
- chaque conteneur peut être partiellement rempli de liquide ;
- chaque moyen de contrôle d'accès peut être agencé sous la forme d'une pièce réalisée dans un matériau qui est thermo-fusible au-delà du seuil ;
- en variante, chaque moyen de contrôle d'accès peut être propre à être placé dans l'état fermé ou l'état ouvert en fonction d'un signal. Dans ce cas, il peut également comprendre une source d'alimentation électrique autonome et des moyens de commande alimentés par cette source d'alimentation électrique et propres à générer le signal destiné à placer chaque moyen de contrôle d'accès dans l'état ouvert lorsque la température est supérieure au seuil ;
   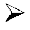 chaque moyen de contrôle d'accès peut, par exemple, être choisi parmi au moins une électrovanne alimentée par la source d'alimentation électrique, et un volet piloté par un actionneur électrique alimenté par la source d'alimentation électrique.

En variante, aumoins un des conteneurs est logé dans le logement du boîtier.

Par exemple, le conteneur peut être installé dans le logement du boîtier. Mais en variante il pourrait être installé à l'extérieur du boîtier tout en communiquant via ses sorties avec le logement du boîtier.

L'invention propose également un véhicule comprenant un ensemble de batterie du type de celui présenté ci-avant. Un tel véhicule peut, par exemple, être de type tout électrique ou hybride, et éventuellement de type automobile.

D'autres caractéristiques et avantages de l'invention apparaîtront à l'examen de la description détaillée ci-après, et des dessins annexés, sur lesquels:
- la figure 1 illustre schématiquement et fonctionnellement une batterie multicellulaire équipée d'un d'un dispositif de protection d'un ensemble de batterie selon un premier exemple de réalisation de l'invention,
- la figure 2 illustre schématiquement et fonctionnellement une batterie multicellulaire équipée d'un d'un dispositif de protection d'un ensemble de batterie selon un deuxième exemple de réalisation de l'invention, et
- la figure 3 illustre schématiquement et fonctionnellement une batterie multicellulaire équipée d'un dispositif de protection d'un ensemble de batterie selon un troisième exemple de réalisation de l'invention.

L'invention a notamment pour but de proposer un dispositif de protection DP destiné à équiper une batterie rechargeable BR de véhicule comportant au moins une cellule de stockage Cn propre à stocker de l'énergie électrique.

Dans ce qui suit, on considère à titre d'exemple non limitatif que la batterie rechargeable BR est de type multicellulaire, et donc qu'elle comprend au moins deux cellules de stockage Cn. Mais l'invention n'est pas limitée à ce nombre de cellules de stockage. En effet, elle concerne toute batterie rechargeable comportant au moins une cellule de stockage capable de stocker (et de restituer) de l'énergie électrique.

Par ailleurs, on considère dans ce qui suit, à titre d'exemple non limitatif, que les cellules (de stockage) Cn de la batterie (rechargeable) BR sont de type Li-ion. Mais l'invention n'est pas limitée à ce type de cellule. Elle concerne en effet tout type de cellule capable de stocker de l'énergie électrique en vue de la restituer. Ainsi, les cellules pourront être également de type Ni-Mh ou plomb ou encore Lithium-Métal-Polymère (ou LMP), par exemple.

De plus, on considère dans ce qui suit, à titre d'exemple non limitatif que la batterie (rechargeable) BR fait partie d'un véhicule automobile de type hybride ou tout électrique. Par exemple, ce véhicule est une voiture. Mais l'invention n'est pas limitée à ce type de véhicule. Elle concerne en effet tout type de véhicule comportant au moins une batterie rechargeable (comportant au moins une cellule), et notamment les cars (ou bus), les camions, les engins de chantier, les engins de voirie, les engins agricoles, les véhicules utilitaires, les trains, les tramways et les bateaux. L'invention concerne d'une manière générale tous les véhicules dont la propulsion est de type tout électrique ou hybride thermique/électrique.

Par exemple, la batterie (rechargeable) BR est destinée à être installée dans le soubassement d'un véhicule.

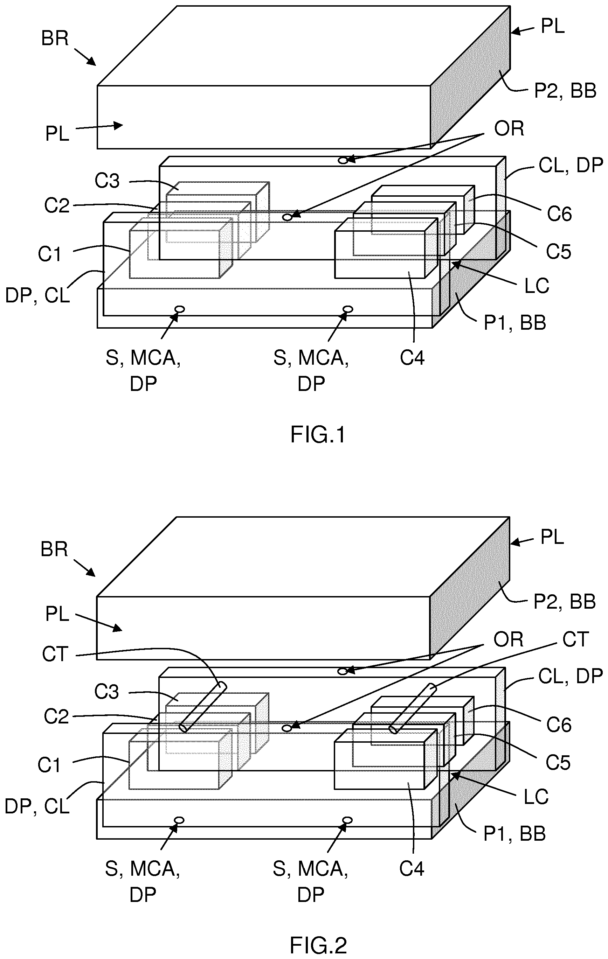

Comme illustré non limitativement sur les figures 1 à 3, une batterie (rechargeable) BR comprend un boîtier BB qui définit un logement LC, et au moins une cellule (de stockage) Cn (n = 1 à N) logée dans le logement LC.

Dans les trois exemples illustrés non limitativement sur les figures 1 à 3, le logement LC loge six cellules C1 à C6 (n = 1 à 6). Mais le nombre de cellules Cn peut prendre n'importe quelle valeur supérieure ou égale à un (1).

Le boîtier BB comprend, de préférence et comme illustré, une partie inférieure P1 et une partie supérieure P2 destinées à être couplées l'une à l'autre de façon hermétique. Une partie au moins de ces parties inférieure P1 et supérieure P2 peut être réalisée dans un matériau résistant à des débuts d'incendie d'une ou plusieurs cellules Cn. Par exemple, ce matériau ignifuge peut être un matériau polymère renforcé à propriété ignifuge tel que le PBT GF-30.

Comme indiqué précédemment l'invention propose d'adjoindre à la batterie BR un dispositif de protection DP selon l'invention.

Comme illustré sur les figures 1 à 3, un dispositif de protection DP, selon l'invention, comprend au moins un conteneur CL destiné à être placé le long d'une paroi longitudinale PL du boîtier BB, contenant un liquide, et comprenant au moins une sortie S équipée d'au moins un moyen de contrôle d'accès MCA.

Dans les trois exemples illustrés non limitativement sur les figures 1 à 3, chaque dispositif de protection DP comprend deux conteneurs CL destinés à être placés respectivement le long de deux parois longitudinales PL opposées du boîtier BB. Cet agencement est bien adapté au cas où la batterie BR présente une largeur un peu inférieure à celle du véhicule, et donc comprend des parois latérales PL qui sont peu éloignées des côtés longitudinaux du véhicule et qui doivent donc être protégées toutes les deux. Mais dans une variante de réalisation dans laquelle seule l'une des deux parois latérales PL est exposée aux chocs latéraux que peut subir le véhicule, le dispositif de protection DP peut ne comprendre qu'un seul conteneur CL placé le long de cette paroi latérale exposée.

Le liquide qui est contenu dans chaque conteneur CL est destiné à amortir un choc latéral, subi par le véhicule sur un côté longitudinal, par amortissement par répartition de pression dans l'ensemble de ce conteneur CL.

De préférence, chaque conteneur CL est partiellement rempli de liquide de sorte qu'il ne soit pas initialement sous pression. Par exemple, 90% de la capacité d'accueil de chaque conteneur CL peut être prise par le liquide, tandis que les 10% restants sont pris par de l'air résiduel. Cela permet, lors d'un choc latéral, une compression du liquide puis une éventuelle montée en pression de nature à transformer une pression d'entrée élevée (ou agressive) en une multitude de petites pressions réparties (et donc non agressives).

Le matériau dans lequel est réalisé le conteneur CL est préférentiellement déformable de manière à favoriser l'amortissement du choc. Par exemple, ce matériau pourra être du polypropylène (ou PP), comme celui qui est fréquemment utilisé pour les réservoirs de carburant des véhicules. L'épaisseur de ce matériau peut, par exemple, être comprise entre environ 2 mm et environ 3 mm.

Le liquide est non inflammable. Par exemple, il peut s'agir d'eau, éventuellement additionnée de glycol, ou de tout autre liquide de refroidissement (et notamment de tout fluide diélectrique non conducteur) utilisé dans l'industrie.

Chaque sortie S d'un conteneur CL est destinée à communiquer avec le logement LC du boîtier BB. On notera que dans les trois exemples illustrés non limitativement sur les figures 1 à 3, chaque conteneur CL comprend deux sorties S. Mais le nombre de sorties S de chaque conteneur CL peut prendre n'importe quelle valeur supérieure ou égale à un (1).

Chaque moyen de contrôle d'accès MCA, équipant une sortie S, est propre à passer d'un état fermé (ou initial), dans lequel il interdit l'évacuation du liquide dans le logement LC via sa sortie S, à un état ouvert, dans lequel il autorise l'évacuation du liquide dans le logement LC via sa sortie S lorsque la température dans son voisinage est supérieure à un seuil choisi.

On entend ici par « voisinage », une zone environnant un moyen de contrôle d'accès MCA. Une telle zone peut éventuellement comprendre ce moyen de contrôle d'accès MCA, mais cela n'est pas obligatoire. En effet, comme on le verra plus loin la température dans le voisinage d'un moyen de contrôle d'accès MCA peut être déterminée par un capteur de température implanté dans ou sur la batterie, ou bien déduite d'une information de température fournie par un capteur de température implanté dans ou sur la batterie, par exemple.

Par exemple, ce seuil choisi peut être compris entre environ 70°C et environ 150°C. De préférence, il est compris entre environ 100°C et environ 107°C.

On comprendra que grâce à l'invention, quelle que soit la cause de l'augmentation de température dans le boîtier BB (choc latéral, court-circuit ou problème de conception d'une cellule Cn), lorsque la température devient supérieure au seuil chaque moyen de contrôle d'accès MCA d'un conteneur CL passe dans son état ouvert et donc le liquide contenu dans ce dernier (CL) passe dans le logement LC via la sortie S associé afin d'inonder les cellules Cn. La capacité calorifique élevée du liquide permet de limiter très efficacement l'augmentation de température interne et donc d'arrêter ou d'au moins ralentir un emballement thermique.

Chaque conteneur CL assure donc non seulement une fonction de protection contre les chocs latéraux (par amortissement par répartition de pression), mais également une fonction de protection contre les emballements thermiques internes lorsque la température devient supérieure au seuil.

Par exemple, chaque conteneur CL peut contenir entre environ 20 litres et environ 50 litres. A titre d'exemple non limitatif, chaque conteneur CL peut contenir environ 30 litres.

Le remplissage de chaque conteneur CL en liquide peut se faire via au moins un orifice OR, muni d'un bouchon et par exemple situé sur une paroi supérieure comme illustré non limitativement sur les figures 1 à 3.

On notera que dans les trois exemples illustrés non limitativement sur les figures 1 à 3, chaque conteneur CL est entièrement logé dans le logement LC du boîtier BB. Mais cela n'est pas obligatoire. En effet, dans une variante non illustrée, chaque conteneur CL pourrait être placé à l'extérieur du boîtier BB le long de l'une des parois latérales PL de ce dernier (BB). Dans ce cas, chaque sortie S de chaque conteneur CL communique avec le logement LC via des ouvertures étanches définies dans le boîtier BB, et éventuellement via des petits conduits de transfert.

On notera également, comme illustré non limitativement dans le deuxième exemple de réalisation illustré sur la figure 2, que lorsque le dispositif de protection DP comprend deux conteneurs CL, ces derniers (CL) peuvent communiquer entre eux via au moins un conduit CT. Cet agencement permet de transférer du liquide d'un conteneur CL comprimé lors d'un choc latéral vers l'autre conteneur CL (non (ou moins) comprimé), afin d'équilibrer au moins partiellement les pressions entre ces conteneurs CL.

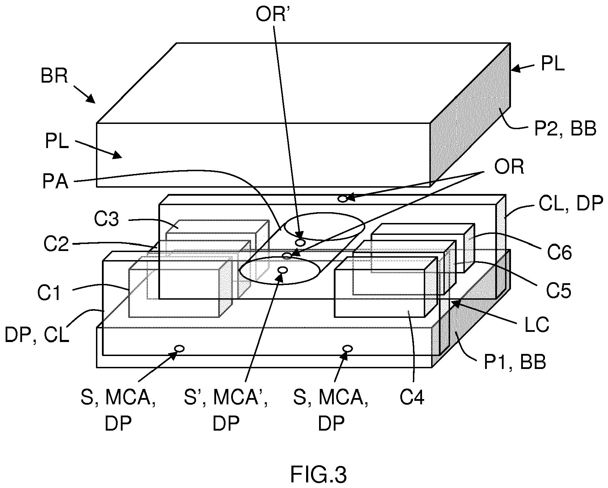

Dans une variante de réalisation illustrée sur la figure 3, le dispositif de protection DP peut également comprendre, en complément de ses deux conteneurs CL, un conteneur auxiliaire CA contenant du liquide et communiquant avec ses deux conteneurs CL. Ce conteneur auxiliaire CA comprend au moins une sortie S' destinée à communiquer avec le logement LC et équipée d'un moyen de contrôle d'accès MCA' propre à passer d'un état fermé (ou initial), dans lequel il interdit l'évacuation du liquide dans le logement LC via sa sortie S', à un état ouvert, dans lequel il autorise l'évacuation du liquide dans le logement LC via sa sortie S' lorsque la température dans son voisinage est supérieure à un seuil choisi. Ce dernier est de préférence le même que celui précité, bien que cela ne soit pas obligatoire.

On notera que dans l'exemple illustré non limitativement sur la figure 3, le conteneur auxiliaire CA comprend une seule sortie S'. Mais le nombre de sorties S' de ce conteneur auxiliaire CA peut prendre n'importe quelle valeur supérieure ou égale à un (1).

On comprendra que, quelle que soit la cause de l'augmentation de température dans le boîtier BB (choc latéral, court-circuit ou problème de conception d'une cellule Cn), lorsque la température devient supérieure au seuil chaque moyen de contrôle d'accès MCA' du conteneur auxiliaire CA passe dans son état ouvert et donc le liquide contenu dans ce dernier (CA) passe dans le logement LC via la sortie S' associé afin d'inonder les cellules Cn.

Le liquide contenu dans ce conteneur auxiliaire CA est de préférence le même que celui qui est contenu dans les conteneurs CL.

Par exemple, ce conteneur auxiliaire CA peut contenir entre environ 5 litres et environ 20 litres. A titre d'exemple non limitatif, ce conteneur auxiliaire CA peut contenir environ 10 litres.

Le matériau dans lequel est réalisé le conteneur auxiliaire CA est de préférence identique à celui utilisé pour les conteneurs CL. L'épaisseur de ce matériau peut, par exemple, être comprise entre environ 2 mm et environ 3 mm.

Le remplissage du conteneur auxiliaire CA en liquide peut se faire via au moins un orifice OR', muni d'un bouchon et par exemple situé sur une paroi supérieure comme illustré non limitativement sur la figure 3.

On notera qu'un dispositif de protection DP peut à la fois comprendre un conteneur auxiliaire CA et au moins un conduit CT du type de celui décrit précédemment en référence à la figure 2.

Au moins deux modes de réalisation peuvent être envisagés pour les différents moyens de contrôle d'accès MCA et MCA'.

Dans un premier mode de réalisation illustré sur les figures 1 à 3, chaque moyen de contrôle d'accès MCA, MCA' peut être agencé sous la forme d'une pièce réalisée dans un matériau qui est thermo-fusible au-delà du seuil. Ce matériau peut, par exemple, être un polymère bitumineux. En variante, chaque moyen de contrôle d'accès MCA, MCA' pourrait être agencé sous la forme d'un disjoncteur thermique qui s'ouvre au-dessus du seuil.

Tant que la température demeure strictement inférieure au seuil, le matériau demeure intègre et donc obstrue totalement, de façon étanche, la sortie S ou S' associée. Le moyen de contrôle d'accès MCA, MCA' est alors dans son état fermé. En revanche, lorsque la température devient supérieure au seuil, le matériau se déforme puis fond et donc n'obstrue plus la sortie S ou S' associée. Le moyen de contrôle d'accès MCA, MCA' est alors dans son état ouvert.

Dans un second mode de réalisation non illustré, chaque moyen de contrôle d'accès MCA, MCA' peut être propre à être placé dans son état fermé ou son état ouvert en fonction d'un signal (analogique ou numérique). Dans ce cas, le dispositif de protection DP peut également comprendre une source d'alimentation électrique autonome et des moyens de commande alimentés par cette source d'alimentation électrique. Ces moyens de commande sont agencés de manière à générer le signal qui est destiné à placer chaque moyen de contrôle d'accès MCA, MCA' dans son état ouvert lorsque la température est supérieure au seuil.

Par exemple, chaque moyen de contrôle d'accès MCA, MCA' peut être une électrovanne alimentée par la source d'alimentation électrique ou un volet piloté par un actionneur électrique alimenté par la source d'alimentation électrique.

La source d'alimentation électrique peut, par exemple, être logée dans un petit boîtier de protection qui est solidarisé à une face externe du boîtier BB. Elle peut être constituée, par exemple, d'au moins une pile.

Dans ce second mode de réalisation, la température peut être déterminée à l'intérieur du boîtier BB par un capteur qui est éventuellement couplé aux moyens de commande. Ce capteur peut faire partie du dispositif de protection DP. Mais cela n'est pas obligatoire étant donné que la batterie BR comprend habituellement un capteur dont les mesures de température sont utilisées par le calculateur qui est chargé de contrôler son fonctionnement.

En fonctionnement normal chaque électrovanne ou volet est dans son état fermé (ou non passant), et donc le liquide demeure à l'intérieur du conteneur CL ou du conteneur auxiliaire CA. En revanche, lorsque les moyens de commande détectent que la température dans le boîtier BB est anormalement élevée (ce qui est généralement le signe d'un prochain début d'incendie au niveau d'une ou plusieurs cellules Cn), ils génèrent un signal (d'alerte) qu'ils transmettent à chaque électrovanne ou volet MCA, MCA' et qui est destiné à placer ce dernier (MCA, MCA') dans son état ouvert (ou passant) en vue de l'inondation de l'intérieur du boîtier BB via chaque sortie S, S'.

Les moyens de commande peuvent, par exemple, être logés dans un petit boîtier de protection solidarisé à une face externe du boîtier BB et pouvant également loger la source d'alimentation électrique. Mais cela n'est pas obligatoire. Ils pourraient en effet être installés dans le logement LC.

De tels moyens de commande peuvent être réalisés sous la forme de circuits électroniques (ou « hardware ») ou d'une combinaison de circuits électroniques et de modules logiciels (ou informatiques ou encore « software »).

L'invention offre plusieurs avantages, parmi lesquels :
- elle permet une protection contre les chocs latéraux combinée à un fonctionnement permanent du mécanisme d'inondation,
- elle peut permettre de ne pas avoir à renforcer la partie structurelle du véhicule dans laquelle est installée la batterie rechargeable,
- elle n'augmente pas significativement la complexité de la batterie rechargeable,
- elle garantit que les cellules vont demeurer immergées dans le liquide et donc qu'il n'y aura pas de court-circuit après l'incident ou l'accident ayant déclenché l'immersion, y compris après l'arrêt du fonctionnement du véhicule.

## Revendications

1. Ensemble de batterie comprenant une batterie (BR) et un dispositif de protection (DP) pour ladite batterie (BR) de véhicule comprenant un boîtier (BB) définissant un logement (LC) logeant au moins une cellule (Cn) de stockage d'énergie électrique, ledit dispositif (DP) comprenant au moins un conteneur (CL) destiné à être placé le long d'une paroi longitudinale (PL) dudit boîtier (BB) et comprenant un liquide destiné à amortir un choc subi par ledit véhicule sur un côté longitudinal, **caractérisé en ce que** chaque conteneur (CL) comprend au moins une sortie (S) destinée à communiquer avec ledit logement (LC) et équipée d'un moyen de contrôle d'accès (MCA) propre à passer d'un état fermé à un état ouvert dans lequel il autorise l'évacuation dudit liquide dans ledit logement (LC) via ladite sortie (S) lorsqu'une température dans son voisinage est supérieure à un seuil choisi.

2. Ensemble de batterie selon la revendication 1, **caractérisé en ce que** ledit dispositif de protection (DP) comprend deux conteneurs (CL) destinés à être placés respectivement le long de deux parois longitudinales (PL) opposées dudit boîtier (BB).

3. Ensemble de batterie selon la revendication 2, **caractérisé en ce que** lesdits conteneurs (CL) communiquent entre eux via au moins un conduit (CT).

4. Ensemble de batterie selon l'une des revendications 2 et 3, **caractérisé en ce que** ledit dispositif de protection (DP) comprend un conteneur auxiliaire (CA) contenant du liquide, communiquant avec lesdits conteneurs (CL) et comprenant au moins une sortie (S') destinée à communiquer avec ledit logement (LC) et équipée d'un moyen de contrôle d'accès (MCA') propre à passer d'un état fermé à un état ouvert dans lequel il autorise l'évacuation dudit liquide dans ledit logement (LC) via ladite sortie (S') lorsqu'une température dans son voisinage est supérieure à un seuil choisi.

5. Ensemble de batterie selon l'une des revendications 1 à 4, **caractérisé en ce que** chaque conteneur (CL) est partiellement rempli dudit liquide.

6. Ensemble de batterie selon l'une des revendications 1 à 5, **caractérisé en ce que** chaque moyen de contrôle d'accès (MCA, MCA') est agencé sous la forme d'une pièce réalisée dans un matériau qui est thermo-fusible au-delà dudit seuil.

7. Ensemble de batterie selon l'une des revendications 1 à 5, **caractérisé en ce que** chaque moyen de contrôle d'accès (MCA, MCA') est propre à être placé dans ledit état fermé ou ledit état ouvert en fonction d'un signal, et **en ce qu'**il comprend en outre une source d'alimentation électrique autonome et des moyens de commande alimentés par ladite source d'alimentation électrique et propres à générer ledit signal destiné à placer chaque moyen de contrôle d'accès (MCA, MCA') dans ledit état ouvert lorsque ladite température est supérieure audit seuil.

8. Ensemble de batterie selon l'une des revendications 1 à 7 **caractérisé en ce que** ledit dispositif de protection (DP) est installé dans ledit logement (LC).

9. Véhicule, **caractérisé en ce qu'**il comprend au moins un ensemble de batterie selon l'une des revendications 1 à 8.

## Patentansprüche

1. Batterieanordnung, umfassend eine Batterie (BR) und eine Schutzvorrichtung (DP) für die Fahrzeugbatterie (BR), umfassend ein Gehäuse (BB), das eine Aufnahme (LC) definiert, die mindestens eine Stromspeicherzelle (Cn) aufnimmt, wobei die Vorrichtung (DP) mindestens einen Behälter (CL) umfasst, der dazu bestimmt ist, entlang einer Längswand (PL) des Gehäuses (BB) angeordnet zu sein, und umfassend eine Flüssigkeit, die dazu bestimmt ist, einen Stoß, den das Fahrzeug auf einer Längsseite erfährt, zu dämpfen, **dadurch gekennzeichnet, dass** jeder Behälter (CL) mindestens einen Ausgang (S) umfasst, der dazu bestimmt ist, mit der Aufnahme (LC) zu kommunizieren, und der mit einem Zugangskontrollmittel (MCA) ausgestattet ist, das geeignet ist, von einem geschlossenen Zustand in einen offenen Zustand überzugehen, in dem es die Ableitung der Flüssigkeit aus der Aufnahme (LC) über den Ausgang (S) gestattet, wenn eine Temperatur in seiner Umgebung höher als ein gewählter Grenzwert ist.

2. Batterieanordnung nach Anspruch 1, **dadurch gekennzeichnet, dass** die Schutzvorrichtung (DP) zwei Behälter (CL) umfasst, die dazu bestimmt sind, jeweils entlang zweier Längswände (PL), die zum Gehäuse (BB) entgegengesetzt sind, angeordnet zu werden.

3. Batterieanordnung nach Anspruch 2, **dadurch gekennzeichnet, dass** die Behälter (CL) miteinander über mindestens eine Leitung (CT) kommunizieren.

4. Batterieanordnung nach einem der Ansprüche 2 und 3, **dadurch gekennzeichnet, dass** die Schutzvorrichtung (DP) einen Hilfsbehälter (CA) umfasst, der Flüssigkeit enthält und mit den Behältern (CL) in Verbindung steht und mindestens einen Ausgang (S') umfasst, der dazu bestimmt ist, mit der Aufnahme (LC) in Verbindung zu stehen, und der mit einem Zugangskontrollmittel (MCA') ausgestattet ist, das geeignet ist, von einem geschlossenen Zustand in einen offenen Zustand überzugehen, in dem es die Ableitung der Flüssigkeit aus der Aufnahme (LC) über den Ausgang (S') gestattet, wenn eine Temperatur in seiner Umgebung höher als ein gewählter Grenzwert ist.

5. Batterieanordnung nach einem der Ansprüche 1 bis 4, **dadurch gekennzeichnet, dass** jeder Behälter (CL) teilweise mit der Flüssigkeit gefüllt ist.

6. Batterieanordnung nach einem der Ansprüche 1 bis 5, **dadurch gekennzeichnet, dass** jedes Zugangskontrollmittel (MCA, MCA') in Form eines Teils angeordnet ist, das aus einem Material hergestellt ist, das über den Grenzwert hinaus heißschmelzbar ist.

7. Batterieanordnung nach einem der Ansprüche 1 bis 5, **dadurch gekennzeichnet, dass** jedes Zugangskontrollmittel (MCA, MCA') geeignet ist, im geschlossenen Zustand oder im offenen Zustand in Abhängigkeit von einem Signal angeordnet zu werden, und dass es ferner eine autonome Stromquelle und Steuermittel, die von der Stromquelle versorgt werden, umfasst, die geeignet sind, das Signal zu erzeugen, das dazu bestimmt ist, jedes Zugangskontrollmittel (MCA, MCA') im offenen Zustand anzuordnen, wenn die Temperatur höher als der Grenzwert ist.

8. Batterieanordnung nach einem der Ansprüche 1 bis 7, **dadurch gekennzeichnet, dass** die Schutzvorrichtung (CP) in der Aufnahme (LC) installiert ist.

9. Fahrzeug, **dadurch gekennzeichnet, dass** es mindestens eine Batterieanordnung nach einem der Ansprüche 1 bis 8 umfasst.

## Claims

1. A battery assembly including a battery (BR) and a protection device (DP) for said battery (BR) of a vehicle, including a casing (BB) defining a housing (LC) housing at least one storage cell (Cn) of electrical energy, said device (DP) including at least one container (CL) intended to be placed along a longitudinal wall (PL) of said casing (BB) and including a liquid intended to absorb a shock to which said vehicle is subjected on a longitudinal side, **characterized in that** each container (CL) includes at least one outlet (S) intended to communicate with said housing (LC) and equipped with an access control means (MCA) suitable to pass from a closed state to an open state in which it permits the evacuation of said liquid in said housing (LC) via said outlet (S) when a temperature in its vicinity is greater than a selected threshold.

2. The battery assembly according to Claim 1, **characterized in that** said protection device (DP) includes two containers (CL) intended to be placed respectively along two opposite longitudinal walls (PL) of said casing (BB).

3. The battery assembly according to Claim 2, **characterized in that** said containers (CL) communicate with one another via at least one duct (CT).

4. The battery assembly according to one of Claims 2 and 3, **characterized in that** said protection device (DP) includes an auxiliary container (CA) containing liquid, communicating with said containers (CL) and including at least one outlet (S') intended to communicate with said housing (LC) and equipped with an access control means (MCA') suitable to pass from a closed state to an open state in which it permits the evacuation of said liquid in said housing (LC) via said outlet (S') when a temperature in its vicinity is greater than a selected threshold.

5. The battery assembly according to one of Claims 1 to 4, **characterized in that** each container (CL) is partially filled with said liquid.

6. The battery assembly according to one of Claims 1 to 5, **characterized in that** each access control means (MCA, MCA') is arranged in the form of a part made from a material which is heat-meltable beyond said threshold.

7. The battery assembly according to one of Claims 1 to 5, **characterized in that** each access control means (MCA, MCA') is suitable to be placed in said closed state or said open state as a function of a signal, and **in that** is further includes an autonomous source of electrical supply and control means supplied by said electrical supply source and suitable to generate said signal intended to place each access control means (MCA, MCA') in said open state when said temperature is greater than said threshold.

8. The battery assembly according to one of Claims 1 to 7, **characterized in that** said protection device (DP) is installed in said housing (LC).

9. A vehicle, **characterized in that** it includes at least one battery assembly according to one of Claims 1 to 8.
